# EUROPÄISCHE PATENTANMELDUNG

(11) **EP 1 726 543 A2**
(43) Veröffentlichungstag der Anmeldung: **29.11.2006**
(21) Anmeldenummer: 06010562.4
(22) Anmeldetag: 23.05.2006
(51) Int. Cl.: B65G 47/51, B65G 17/48

(54) **Stückgutspeicher**

(30) Priorität: 26.05.2005 CH 9022005
(71) Anmelder: Rotzinger AG, 4303 Kaiseraugst (CH)
(72) Erfinder: Philipp, Kurt, 79639 Grenzach-Wyhlen (DE)
(74) Vertreter: Braun, André jr.

(57) **Zusammenfassung**

Der zwischen Produktion (P) und Verpackung (V) angeordnete Speicher weist ein endloses, umlaufendes Kettenpaar (6) auf, an welchem die produktetragenden Gondeln (5) pendelnd aufgehängt sind. Das auf einem vertikalen und auf einem horizontalen Strang (I/II) geführte Kettenpaar (6) ist über eine obere und eine untere Umlenkvorrichtung (9) geführt. Jede Umlenkvor- richtung ist verschiebbar in einer linearen Führung gelagert. Ein Spannseil (14a) ist mit seinen Enden an den beiden Umlenkvorrichtungen befestigt und hält das Kettenpaar (6) in jeder Betriebslage gespannt. Beim Passieren des oberen Umlenkbereichs werden die gefüllten Gondeln (5) durch beidseits angeordnete, kurbelartige Aufhängeorgane (17) radial ausgelenkt, sodass benachbarte Gondeln in einem gegenseitigen Abstand gefahren werden können, der in den Vertikalbereichen des Gondelweges dem Abstand (b) zweier benachbarter Tablare (4) entspricht. Mittels einer weiteren Fortbildung des Erfindungs- gedankens ist gewährleistet, dass die beiden Trums (6a/6b) des horizontalen Kettenstranges (II) unterstützt sind, und dass die Kette (6) beim Übergang auf das obere Unterstützungsprofil (29) das letztere trotz der ständigen Verschiebung der horizontalen Umlenkvorrichtung (10) problemlos kreuzen kann.

## Beschreibung

Die vorliegende Erfindung betrifft einen Stückgutspeicher gemäss dem Oberbegriff des unabhängigen Patentanspruchs 1 und eine Umlenkvorrichtung gemäss dem Oberbegriff des unabhängigen Patentanspruchs 6.

Derartigen Stückgutspeicher werden bekanntlich zwischen Produktion und Verpackung eingeschaltet, um eine Pufferzone für den Fall von produktions- und verpackungsseitigen Betriebsstörungen zu bilden. Die reihenweise von einem Einlaufförderer angelieferten Produkte, z.B. verpackte oder unverpackte Schokoladeriegel, sollen im optimalen Fall den Verpackungsmaschinen kontinuierlich und lückenlos zugeführt werden.

Das britische Patentgesuch GB 2 124 574 A zeigt einen als Pufferzone zwischen zwei Bearbeitungseinrichtungen angeordneten Stückgutspeicher mit je einem vertikalen und einem horizontalen Strang. Dabei ist am Ende eines jeden Stranges eine vertikal bzw. horizontal verschiebbare Umlenkvorrichtung angeordnet. Die Umlenkvorrichtungen sind mittels eines Spannorganes so mitein- ander verbunden, dass sie bei Aufrechterhaltung der Kettenspannung nur gemeinsam verschoben werden können.

Dabei sind die beiden Ketten individuell mit "Artikelhaltern" bestückt. Diese Artikelhalter sind starr, d.h. nicht drehbar an den Ketten befestigt, sodass die an den Artikelhaltern befindlichen Produkte im Bereich der. Kettenumlenkung systembedingt ihre Lage verändern. Sie werden dabei regelrecht auf den Kopf gestellt, d.h. um 180° gewendet, was mit lose auf Tablaren liegenden Produkten selbstverständlich eine Unmöglichkeit ist, da derartige Produkte, wie z.B. Schokoladetafeln, während des gesamten Durchlaufs, vom Beladen bis zum Entladen, lagekonform liegen bleiben müssen.

Ferner benötigt die im britischen Patentgesuch GB 2 124 574 beschriebene Einrichtung Detektoren 7a, 7b, 7c, um festzustellen, wo sich der die Artikel tragende Schlitten gerade befindet. Diese Feststellung der momentanen Schlittenposition ist wichtig, um den Füllstand des Speichers zu kennen, bzw. zu wissen, zu welchem Zeitpunkt der Speicher leer oder voll ist.

Auch bleibt bei den bekannten Konstruktionen, beispielsweise gemäss der europäischen Patentanmeldung EP 1 331 181 A1, die Tatsache unberücksichtigt, dass die mit Tablaren beladenen Gondeln beim Passieren der Umlenkvorrichtungen in einem relativ grossen gegenseitigen Abstand gefahren werden müssen, damit Kollisionen benachbarter Gondeln mit Sicherheit vermieden werden können. Dadurch wird aber der verfügbare Speicherraum stark verkürzt. Da die Förderketten ferner die zwischen den Gondeln bestehenden, leistungshemmenden Distanzen zurücklegen müssen, wird damit auch die Belade- und Entladetaktrate erheblich reduziert.

Es ist die Aufgabe der vorliegenden Erfindung, diese Nachteile der bekannten Einrichtungen zu beheben und einen Stückgutspeicher sowie eine Umlenkvorrichtung für ein endloses, angetriebenes, dem Stückguttransport dienendes, auf einer gemeinsamen Achse angeordnetes Kettenpaar vorzuschlagen, an welchem die zu transportierenden Stückgüter in pendelnd gelagerten Gondeln aufgehängt sind. Ein Ziel der vorliegenden Erfindung ist es, die Gondeln unmittelbar, d.h. in einem dem Taktbetrieb entsprechenden Abstand, der in den Vertikalbereichen des Gondelweges dem Abstand einander benachbarter Tablare entspricht, aufeinander folgen zu lassen, so dass für die Überbrückung der Gondelabstände kein spezieller Takt zwischengeschaltet werden muss. - Ein weiteres Ziel der vorliegenden Erfindung besteht ferner darin, im Vergleich zu den konventionellen Speichern ähnlicher Speicherkapazität mit einem Bruchteil, z.B. einem Drittel, der Kettenlänge auszukommen und die Taktraten beim Beladen und Entladen wesentlich zu verbessern, d.h. nahezu zu verdoppeln. Als Konsequenz dieser Massnahme ergibt sich ferner eine erhebliche Kosteneinsparung bei der Ausrüstung und beim Einbau.

Diese Aufgabe wird dank der vorliegenden Erfindung durch die im kennzeichnenden Teil der unabhängigen

Patentansprüche 1 und 6 definierte Merkmalskombination gelöst.

Nachstehend wird anhand der beiliegenden Zeichnung ein Ausführungsbeispiel der Erfindung beschrieben. Es zeigen:
Fig. 1 eine Seitenansicht einer Ausführungsform eines mit einer erfindungsgemässen Umlenkvorrichtung versehenen Stückgutspeichers,
Fig. 2 eine entladeseitige Frontansicht dieses Stückgutspeichers,
Fig. 3 eine vereinfachte Darstellung einer Gondel und deren Aufhängung in grösserem Massstab,
Fig. 4 ein Detail im Bereich der oberen Kettenumlenkung,
Fig. 5 einen Schnitt längs der Linie A - A in Fig. 6,
Fig. 6 eine Seitenansicht der Kettenumlenkung des horizontalen Kettenstranges und

Fig. 7 die Ansicht längs der Linie B-B in Fig.5.

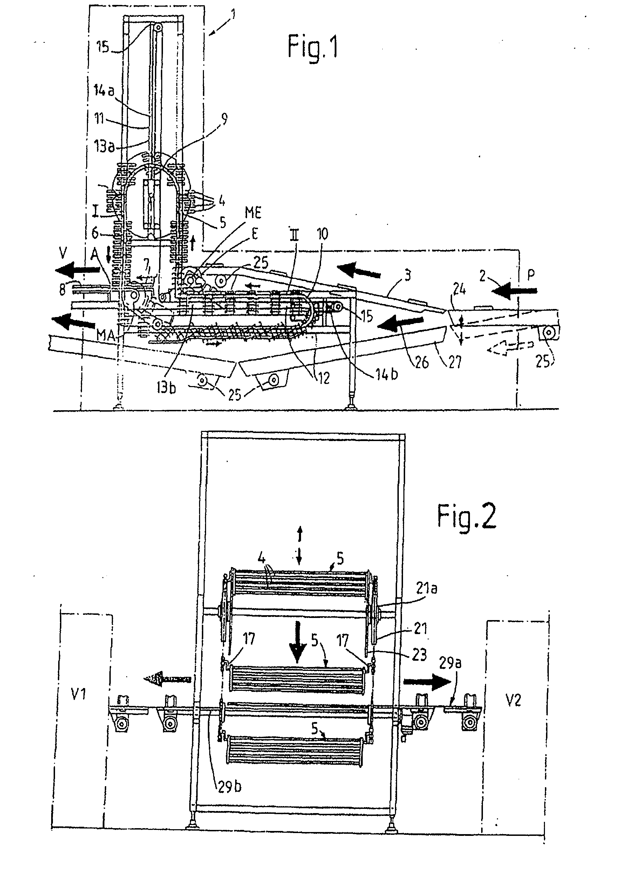

Fig. 1 zeigt in vereinfachter Darstellung einen in seiner Gesamtheit mit 1 bezeichneten Stückgutspeicher, der zwischen einer Produktionsstätte P und einer oder mehreren Verpackungsmaschinen V eingeschaltet ist. Das von der Produktionsstätte P, beispielsweise einer Anlage zur kontinuierlichen Herstellung verpackter oder unverpackter Schokoladetafeln, in Richtung des Pfeiles 2 auf einer Beladebahn 3 angelieferte Gut wird am Einlauf E des Speichers über eine bekannte Vorrichtung auf die Tablare 4 einer im Beladetakt am Einlauf vorbeibewegten Gondel 5 geschoben und von den Gondeln 5 zum Auslauf A befördert. Dort werden die Gondeln über einen Schieber 7 auf ein Band 8 befördert und anschliessend den Verpackungsmaschinen V zugeleitet. Der Schieber 7 kann, wie aus Fig. 1 ersichtlich, zwei
übereinander angeordnete Ausschuborgane aufweisen, durch welche jeweils der Inhalt zweier Tablare auf bereitstehende Förderbänder geschoben werden kann.

Ein endloses, umlaufendes Kettenpaar 6 ist auf seiner ganzen Länge mit Gondeln 5 bestückt, die mittels einer noch zu beschreibenden Aufhängevorrichtung an den Ketten 6 beidseits pendelnd aufgehängt sind. Wie Fig. 1 ferner zeigt, durchläuft das Kettenpaar 6 sowohl einen vertikalen Strang I als auch einen horizontalen Strang II. Um dies zu erreichen, ist das endlose Kettenpaar 6 über eine obere Umlenkvorrichtung 9 und eine untere Umlenkvorrichtung 10 geführt. Beide Umlenkvorrichtungen 9 und 10 sind in Führungen 11 bzw. 12 so geführt, dass sich die untere Umlenkvorrichtung 10 je nach Bedarf in horizontaler Richtung, die obere Umlenkvorrichtung 9 in vertikaler Richtung entsprechend verschieben lässt. Die Führungen 11 und 12 können beispielsweise als Gleit- backenpaare ausgebildet sein, die sich längs einer vertikalen Schiene 13a bzw. einer horizontalen Schiene 13b bewegen lassen. - Wie sich aus der nachfolgenden Beschreibung noch ergeben wird, sind die beiden Stränge I und II, welche den Vertikal- bzw. den Horizontal- bereich der Gondelführung darstellen, in Abhängigkeit von der jeweiligen Betriebsart üblicherweise in ständiger Bewegung, sodass sich deren Längen auch ständig in Anpassung an die jeweilige Speichersituation ändern können.

Um die verschiebbar gelagerten Umlenkvorrichtungen 9 und 10 in jeder Betriebsphase im rechten gegenseitigen Abstand und unter Spannung zu halten, ist eine Spannvorrichtung vorgesehen. Zu diesem Zweck ist an der oberen Umlenkvorrichtung 9 das eine Ende eines Spannseils 14a (Fig.1) befestigt, das über Umlenk- rollen 15 bis zur unteren Umlenkvorrichtung 10 geführt und an dieser ebenfalls festgemacht ist. Bei der in Fig. 1 dargestellten Ausführung ist das Seil 14a am rechten Ende des horizontalen Stranges II über die dortige Umlenkrolle 15 an der ortsfest und drehbar gelagerten Nachstell-Spindel 14b befestigt. Statt eines Spannseils 14a kann als Spannvorrichtung auch eine Kette eingesetzt werden. Die hierzu erforderliche Spannung kann beispielsweise über eine Feder oder mittels an den Enden der Spannvorrichtung angehängter Gewichte gewährleistet sein. Eine gelegentlich erforderliche Spannungskorrektur kann über die an der Spannvorrichtung angreifende nachstellbare Spindel 14b erfolgen.

Die zweifache Funktion des Spannmittels, d.h. bei vorliegendem Ausführungsbeispiel des Spannseils, besteht also einerseits in der mechanischen Koppelung der beiden Umlenkvorrichtungen 9 und 10 und andererseits in der Aufrechterhaltung der Kettenspannung. Kette 6 und Seil 14a ergänzen sich insofern, als das Kettenpaar 5 die beiden Umlenkvorrichtungen 9 und 10 umschliesst und zusammenzuhalten sucht, während das Spannseil 14a das Bestreben hat, die beiden Umlenkvorrichtungen 9 und 10 auseinanderzuziehen und dadurch die Kette in Spannung zu halten.

Da das Kettenpaar 6 zwei identische, endlose Ketten aufweist, gilt selbstverständlich alles, was in Bezug auf eine Kette und deren Umlenkvorrichtung ausgesagt wird, auch für die andere Kette.

Zum Antrieb der beiden endlosen Ketten 6 ist einlaufseitig ein Einlaufantrieb ME und auslaufseitig ein Auslaufantrieb MA angeordnet. Die beiden Antriebe ME und MA sind von einer Zentrale aus so gesteuert, dass sie die Gondeln 5 über das Kettenpaar 6 von Tablar zu Tablar weitertakten. Mittels der beiden Antriebe ME und MA wird die gesamte Durchlaufstrecke der Gondeln 5 also in die-beiden bereits erwähnten Stränge I und II unterteilt, so dass oberhalb der Einlauf-Auslaufebene jeweils nur gefüllte, darunter nur leere Gondeln 5 zirkulieren.

Das Betriebsverhalten dieses vorstehend beschriebenen Stückgutspeichers lässt sich am besten beschreiben, wenn die folgenden Betriebsphasen unterschieden werden:
1. Wenn der Speicher leer ist, d.h. wenn sich die Gondeln 5 noch ungefüllt in der Leerzone befinden, die in diesem Falle auch einen Teil des Vertikalstranges I umfasst, dann befinden sich die beiden Umlenkvorrichtungen 9 und 10 in der in Fig. 1 dargestellten Lage. Die obere Umlenkvorrichtung 9 hat demnach ihre unterste, die untere Umlenkvorrichtung 10 ihre extrem rechts liegende Endlage erreicht. Werden nun am Einlauf E die Gondeln 5 beladen und im gleichen Takt am Auslauf A Gondeln entladen, dann werden die Gondeln mittels des Kettenpaares 6 auf der gesamten Durchlaufstrecke weitergetaktet, ohne dass die beiden Umlenkvorrichtungen 9 und 10 ihre Endlage verlassen.
2. Ergibt sich nun beispielsweise am Auslauf A ein Engpass, der durch einen Defekt einer Verpackungsmaschine hervorgerufen sein kann, so kann am Auslauf vorübergehend nicht entladen werden. Da nun aber am Einlauf E im Beladetakt weitergearbeitet wird, wird die untere Umlenkvorrichtung 10 nach links gezogen und das am Auslauf blockierte Kettenpaar 6 bewegt sich zwangsläufig mit der Umlenkvorrichtung 9 nach oben, wodurch im oberen Bereich Platz für gefüllte Gondeln geschaffen wird. Dieser Vorgang setzt sich fort, bis alle Gondeln 5 den oberen Vertikalbereich ausfüllen. Dank dem Spannseil 14a bleibt das Kettenpaar dabei gespannt und die beiden Umlenkvorrichtungen 9 und 10 bewahren ihren gegenseitigen Abstand.
3. Tritt dagegen eine Störung am Einlauf E auf, so wird das Kettenpaar 6 beladeseitig blockiert und befördert nun die vollen Gondeln 5 am Auslauf vorbei, wo sie im Entladetakt entladen und anschliessend in die untere, im Horizontalbereich befindliche Leerzone gefahren werden. Dieser Entladevorgang wird dann solange weitergeführt, bis praktisch alle Gondeln entleert sind und sich in der Leerzone gesammelt haben.
4. Da nun sowohl beladeseitig - am Einlauf E - als auch entladeseitig - am Auslauf A - mit zwei getrennt gesteuerten Antrieben ME und MA gearbeitet wird, kann an beiden Stellen je nach Bedarf mit unterschiedlichen Taktraten gefahren werden. Dies bedeutet, dass sich die Umlenkvorrichtung 9 bei überwiegender, am Einlauf E auftretender Beladetaktrate nach oben und bei überwiegender, am Auslauf A auftretender Entladetaktrate nach unten bewegt und die Umlenkvorrichtung 10 diese Bewegung entsprechend mitmacht.

Durch die Umlenkung des Kettenpaares ergibt sich nach dem Gesetz der Flaschenzugrolle, dass sich die Umlenkvorrichtungen 9 und 10 stets synchron mit der halben Taktraten-Differenz in Richtung der grösseren, am Einlauf E bzw. am Auslauf A herrschenden Arbeitsge- schwindigkeit bewegen. - Gemäss Fig. 1 füllen die leeren Gondeln 5 den unteren Horizontalbereich (Strang II) sowie einen Teil des oberen Vertikalbereichs (Strang I).

Es wurde bereits einleitend erwähnt, dass der gegenseitige Abstand einander benachbarter Gondeln 5 bisher beträchtlich grösser als der Abstand zweier benachbarter Tablare 4 einer Gondel 5 sein musste, um die unerwünschten Kollisionen gefüllter Gondeln zu vermeiden. Diese Kollisionen treten in Anbetracht kurzer Gondelabstände unweigerlich auf, wenn die Gondeln die Umlenkvorrichtung passieren und durch die unvermeidlichen Beschleunigungen ins Schwanken geraten. Da die Produkte in vielen Fällen über die Tablarabmessungen hinausragen, bestimmte bisher die Produktlänge massgeblich den gegenseitigen Mindestabstand der Gondeln im Verhältnis zum Durchmesser der Kettenräder im Umlenkbereich. Im Hinblick auf die Reduzierung des Gondelabstands auf den dem Arbeitstakt entsprechenden Abstand benachbarter Tablare wird daher die folgende Gondelaufhängung vorgeschlagen:

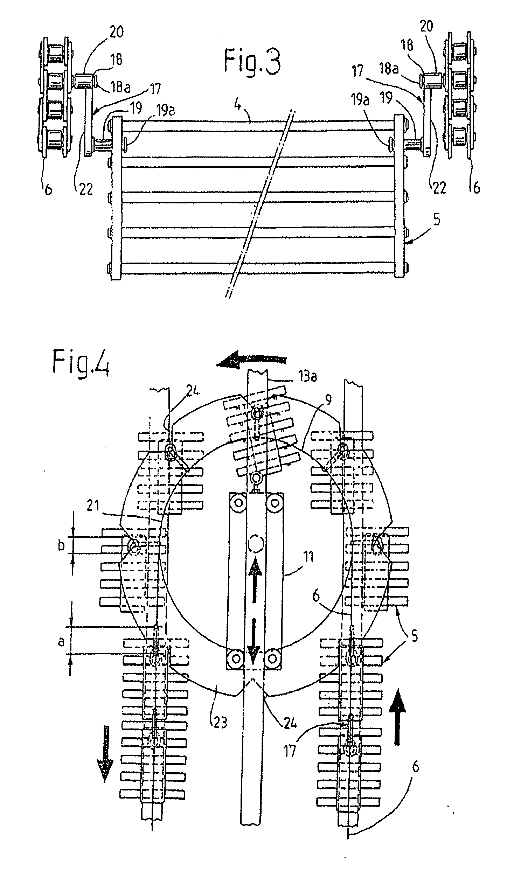

Fig. 3 zeigt eine mit 5 Tablaren 4 ausgestattete Gondel, welche beidseits über zwei koaxiale kurbelartige Aufhängevorrichtungen 17 an den beiden endlosen Ketten 6 pendelnd aufgehängt ist und die Ketten somit mechanisch koppelt. An jeder der Aufhängevorrichtungen 17 lassen sich die folgenden Einzelteile unterscheiden:
   - der seitlich aus der Kette 6 herausragende, eine Verlängerung der Kettenrolle bildende kettenseitige Bolzen 18,
   - ein in der Seitenwand der Gondel 5 lose drehbar gelagerter, mit einer Sicherung 19a gegen axiales Verschieben versehener gondelseitiger Bolzen 19 und
   - ein Kurbelarm 22, welcher fest mit dem gondelseitigen Bolzen 19 und mit einer zylindrischen Büchse 20 verbunden ist, die den kurbelseitigen Bolzen 18 lose drehbar umschliesst und ebenfalls über einen Splint 18a oder ein anderes Arretierorgan gegen axiale Verschiebung gesichert ist.

Im Zusammenhang mit dieser konstruktiven Ausbildung der Gondelaufhängung ist mit dem Kettenrad 21 (Fig.4) der oberen Umlenkvorrichtung 9 drehstarr eine kreisförmige Steuerscheibe 23 verbunden, welche über den Umfang des Kettenrades 21 hinausragt und im Abstand der Kurbel-Anlenkstellen an den Ketten 6 mit prismenförmigen, peripherischen Ausnehmungen 24 versehen ist. Bei der Ankunft einer Gondel 5 im Bereich dieser Steuerscheibe 23 hängt die Aufhänge- vorrichtung 17, wie aus Fig.4 ersichtlich, unter dem Einfluss des Gondelgewichtes senkrecht nach unten, d.h. fluchtend zur parallel laufenden Kette 6. Im Verlaufe der sich daran anschliessenden Aufwärts- bewegung der Gondel trifft nun die Ausnehmung 24 der rotierenden Steuerscheibe 23 auf den gondelseitigen

Bolzen 19 (Fig. 3) und lenkt dadurch die Gondel in radialer Richtung um die Länge a (Fig. 4) des Kurbelarmes 22 nach aussen ab. Der Aufhängepunkt der Gondel 5 wird dadurch um das Mass a radial ausgelenkt. Damit steht nun jeder Gondel auf ihrem Weg über die Umlenkvorrichtung 9 ein grösserer Pendelbereich zur Verfügung. Als Folge hiervon kann der Abstand benachbarter Gondeln 5 auf den Abstand benachbarter Tablare 4 reduziert und nun auch im Zwischenbereich der Gondeln im Beladetakt durchgefahren werden.

Dank der Vermeidung des grösseren Abstandes zwischen benachbarten Gondeln 5 können nun auf gleichem Speicherraum 50% mehr Produkte gespeichert werden. Zudem ist eine doppelt so hohe Belade- und Entladetaktrate möglich, da die Ketten nun keine leistungshemmenden Distanzen zwischen den Gondeln mehr zurücklegen müssen.

Wie Fig. 4 zeigt, schliessen sich die Gondeln 5 im Betrieb des Speichers im Abstand b (Fig.4), der dem gegenseitigen Abstand einander benachbarter Tablare 4 entspricht, aneinander an. Auch ist in Fig. 4 klar ersichtlich, wie das Kettenradpaar 21 mit den Steuerscheiben 23 über Naben 21a drehstarr verbunden ist.

In Bezug auf Fig. 1 wurde festgestellt, dass die Beladung der Gondeln 5 am Einlauf E mit den Produkten erfolgt, die über die Beladebahn 3 in Pfeilrichtung 2, von der Produktion P kommend, angeliefert werden. Für den Fall, dass der Stückgutspeicher aus betrieblichen Gründen umgangen werden soll, ist eine By-pass-Anordnung vorgesehen, welche es gestattet, das direkt von der Produktion P kommende Band 24 mittels seiner Schwenkvorrichtung 25 in Richtung des Pfeiles 26 so zu verschwenken, dass das Produkt einer Umgehungsbahn 27 und von dieser einem anderen Stückgutspeicher bzw. einer weiteren Verarbeitung zugeführt wird.

Dank der einfachen und effizienten Kombination und Kopplung der beiden verschiebbaren Kettenumlenkvorrichtungen 9 und 10 mit der beschriebenen, kurbelförmigen Gondelaufhängung kommt der beschriebene Speicher bei vergleichbarer Speicherkapazität mit nur einem Drittel der Kettenlänge, einem Drittel des umbauten Raumes und etwa der Hälfte der Gondeln aus. Zudem ist die Belade- und Entladegeschwindigkeit, d.h. die Taktrate, doppelt so hoch als bei den konventio- nellen Gondelspeichern. Als Konsequenz hiervon sind die Kosten eines solchen Speichers sehr attraktiv, da viel weniger Ausrüstung benötigt wird und auch die Baukosten erheblich reduziert werden.

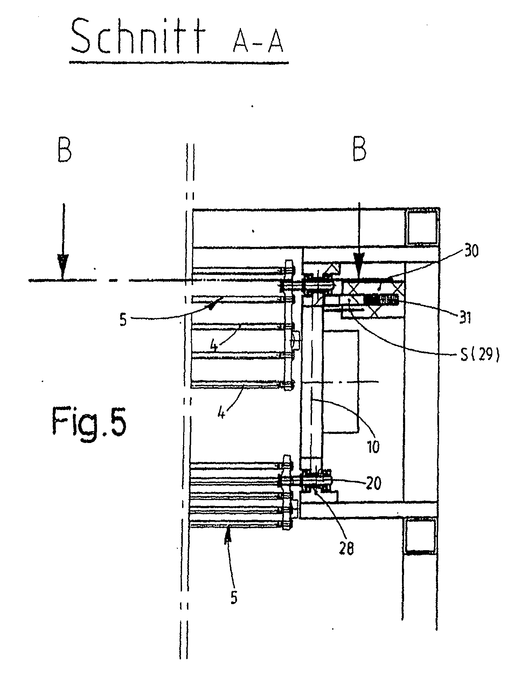

Eine weitere Ausbildung des Erfindungsgedankens wird nachstehend anhand der Figuren 5, 6 und 7 der Zeichnung beschrieben.

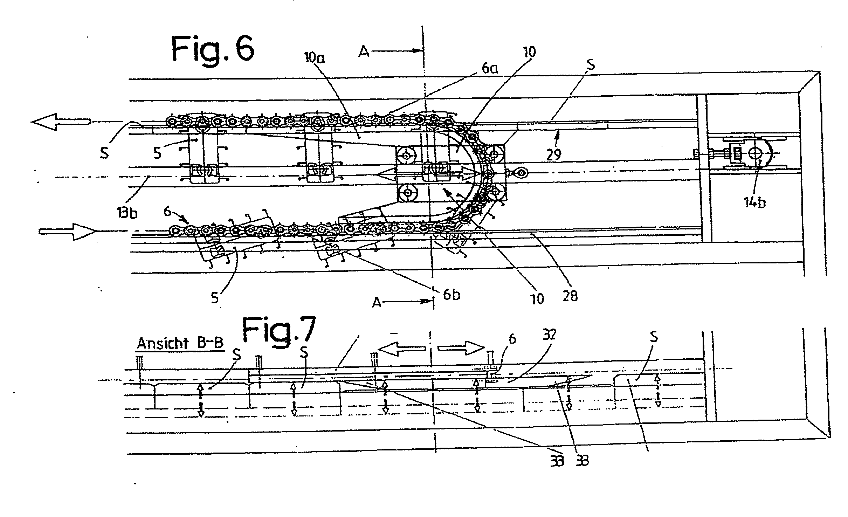

In Fig. 6 ist der Umlenkbereich der beiden endlosen Ketten 6 am Ende der horizontalen Kettenführung dargestellt. Die Figur zeigt die längs der Schiene 13b verschiebbare Umlenkvorrichtung 10, eine der beiden Ketten 6, die an den Ketten hängenden Gondeln 5 und die für das Spannseil erforderliche Spannvorrichtung 14b.

Bei der Beschreibung der Figur 1 wurde bisher unberücksichtigt gelassen, dass die Kette 6 sowohl in ihrem oberen als auch in ihrem unteren Trum 6a bzw. 6b zwecks Vermeidung eines Durchhanges unterstützt werden muss. Zu diesem Zwecke sind sowohl im unteren als auch im oberen Kettentrum Stützprofile 28 bzw. 29 angebracht, auf denen die Kette 6 verschiebbar aufliegt. Obertrum 6a und Untertrum 6b müssen im Bereich der horizontalen Kettenführung immer unterstützt sein, ganz unabhängig davon, in welcher Lage sich die Kettenumlenkvorrichtung 1o gerade befindet; denn nur ohne Durchhang können die Ketten sauber gespannt werden.

Diese Kettenstützung ist beim Untertrum 6b der Kette problemlos dadurch zu realisieren, dass ein durchgehendes Kettenstützprofil 28 unterhalb des Untertrums angeordnet ist, auf das sich die umlaufende Kette abstützen kann. Beim Obertrum 29 der Kette kann dagegen kein durchgehen- des Kettenstützprofil eingesetzt werden, da die Kette im oberen Bereich der verschiebbaren Kettenumlenkung - immer von unten kommend - das Kettenstützprofil 29 kreuzen muss, damit sich das Obertrum der Kette, oben liegend, auf das Profil 29 abstützen kann.

Um dies zu erreichen, ist das Kettenstützprofil 29 in beweglich gelagerte, abrückbare Segmente S aufgeteilt, die in einer Führung 30 (Fig. 5) verschiebbar gelagert und durch Druckfedern 31 in ihrer Lage gehalten sind.

Die Betätigung der Segmente S, d.h. deren Verschiebung aus dem Weg der normalen Kettenführung, erfolgt durch beidseitig auf der verschiebbaren Kettenumlenkung 10 angeordnete Kulissen 32 (Fig. 7), deren beide Endabschnitte mit Abschrägungen 33 versehen sind. Diese fest mit der Kettenumlenkvorrichtung 10 verbundenen Kulissen 32 nehmen infolgedessen an jeder Verschiebebewegung der Umlenkvorrichtung 10 teil und machen für den Kettendurchtritt zum oberen Kettentrumbereich genau dort einen Korridor frei, wo die Kette nach oben durchstossen muss. Somit wird immer in beiden Bewegungsrichtungen der verschiebbaren Kettenumlenkung 10 eine Anzahl der Kettenstützsegmente S abgerückt, damit die von unten kommende Kette 6 das Stützprofil 29 kreuzen kann.

Während die Segmente S des oberen Stützprofils 29 durch die Kulisse 32 aus dem Bewegungsbereich der Kette verschoben werden, ist der entsprechende Abschnitt des oberen Kettentrums ohne Abstützung. Um die Abstützung der Kette auch in diesem - stets wechselnden - Abschnitt zu gewährleisten, ist die Umlenkvorrichtung 10 in ihrem oberen Abschnitt 10a (Fig. 6) so verlängert, dass sich dieser Abschnitt 10a direkt unterhalb des abzustützenden Kettenteils befindet und damit momentan die Funktion der abgerückten Stützsegmente S übernimmt.

## Patentansprüche

1. Stückgutspeicher (1) als Pufferzone zwischen zwei Bearbeitungsvorrichtungen, insbesondere zwischen Produktion und Verpackung, mit einem endlosen, geführ- ten Kettenpaar (6), an welchem zur vorübergehenden Speicherung der Stückgüter bestimmte, mit Tablaren (4) versehene Gondeln (5) pendelnd aufgehängt sind, mit je einer Vorrichtung zum Beladen bzw. Entladen der Tablare (4) und Antriebsmotoren (ME;MA), welche dazu dienen, das Kettenpaar im Bereich des Beladens bzw. Entladens mit einer entsprechenden Taktfrequenz zu bewegen, wobei das Kettenpaar (6) einen horizontalen Strang (II) mit einer horizontal verschiebbaren Kettenumlenkung (10) aufweist, und ferner zwecks Vermeidung eines Kettendurchhanges sowohl das obere als auch das untere Kettentrum (6a bzw. 6b) dieses horizontalen Kettenstranges (II) auf ihrer-Gesamtlänge mittels eines jeweils unterhalb der betreffenden Kette (6) verlaufenden Kettenstützprofils (28 bzw. 29) geführt sind, **dadurch gekennzeichnet, dass** das obere Kettenstützprofil (29) des horizontalen Kettenstranges (II) in mehrere, beweglich gelagerte Segmente (S) unterteilt ist, die sich in Abhängigkeit von der momentanen Lage der verschiebbaren Kettenumlenkung (10) aus ihrer Ursprungslage so verschieben lassen, dass sie
**dadurch** dem im Umlenkbereich nach oben wandernden
Kettenpaar (6) eine Lücke freigeben, durch welche das Kettenpaar die Ebene des oberen Kettenstützprofils (29) kreuzen kann und anschliessend wieder auf demselben aufliegt (Fig. 5 bis 7).

2. Stückgutspeicher nach Anspruch 1, **dadurch gekennzeichnet, dass** die Betätigung der beweglich gelagerten Segmente (S) durch beidseitig auf der verschiebbaren Kettenumlenkvorrichtung (10) angeordnete, an beiden Enden angeschrägte Kulissen (32) erfolgt, die mit der verschiebbaren Kettenumlenkung (10) fest verbunden und damit in der Lage sind, abhängig von der momentanen Position dieser Kettenumlenkung, eine entsprechende Anzahl der genannten Segmente (S) beiseitezudrücken.

3. Stückgutspeicher nach einem der Ansprüche 1 oder 2, **dadurch gekennzeichnet, dass** die genannten Segmente (S) durch elastischen Druck, vorzugsweise mittels Druckfedern (31,Fig.5), in ihrer Lage gehalten sind, um eine vorübergehende seitliche Verschiebung der Segmente (S) zuzulassen.

4. Stückgutspeicher nach einem der Ansprüche 1 bis 3, **dadurch gekennzeichnet, dass** die verschiebbar gelagerte Umlenkvorrichtung (10) des horizontalen Kettenstranges in ihrem oberen, unterhalb des oberen Kettentrums (6a) verlaufenden Abschnitt so verlängert ist, dass diese Verlängerung (10a) in jenem Bereich,
in dem die Kette die Ebene des oberen Kettenstütz- profils kreuzt, die dort durch die Verschiebung der Stützsegmente (S) weggefallene Kettenstützfunktion vorübergehend übernehmen kann.

5. Stückgutspeicher nach einem oder mehreren der Ansprüche 1 bis 4, **dadurch gekennzeichnet, dass** derselbe zusätzlich zu dem erwähnten horizontalen Strang (II) auch einen mit demselben gekoppelten vertikalen Strang (I) aufweist und jeweils am Ende des vertikalen bzw. horizontalen Stranges (I/II) eine vertikal bzw. horizontal verschiebbare Umlenkvor- richtung (9/10) angeordnet ist.

6. Umlenkvorrichtung für ein endloses, angetriebenes, dem Stückguttransport dienendes, auf jeweils gemeinsamen Achsen angeordnetes Kettenpaar (6), an welchem die zu transportierenden Stückgüter in pendelnd gelagerten Gondeln (5) aufgehängt sind, die am oberen Ende eines vertikalen Kettenführungsstranges (I) nach unten umgelenkt werden, **dadurch** gekenn -zeichnet, dass die Gondeln (5) an den Ketten (6) mittels einer kurbelartigen Aufhängevorrichtung (17) gelagert sind, deren Kurbelarm (22) einerseits an kettenseitigen, andererseits an gondelseitigen Bolzen (18 bzw. 19) drehbar gelagert ist und Mittel vorgesehen sind, um die Gondeln im Umlenkbereich um die Länge des Kurbelarmes (22) radial nach aussen zu verlagern und infolgedessen den Umlenkbereich in einem gegenseitigen Abstand zu durchlaufen, der eine
gegenseitige Beeinträchtigung einander benachbarter Gondeln (5) ausschliesst (Fig. 3 und 4).

7. Umlenkvorrichtung nach Anspruch 6, **dadurch gekennzeichnet, dass** die beiden Kettenräder (21) mit je einer Steuerscheibe (23) drehstarr verbunden sind, die mit Ausnehmungen (24) versehen ist, deren gegenseitiger Abstand so bemessen ist, dass die Gondeln (5) beim Passieren der genannten Ausnehmungen (24) von diesen an den gondelseitigen Bolzen (19) der Aufhängevorrichtung (17) erfasst und somit bei der Drehung der Steuerscheibe (23) um die Länge (a) des Kurbelarmes (22) radial nach aussen verlagert werden.

8. Verwendung der Umlenkvorrichtung nach den Ansprüchen 6 und 7 in einem Stückgutspeicher gemäss einem oder mehreren der Ansprüche 1 bis 5.
